# EUROPÄISCHE PATENTANMELDUNG

(11) **EP 0 869 345 A2**
(43) Veröffentlichungstag der Anmeldung: **07.10.1998**
(21) Anmeldenummer: 98105911.6
(22) Anmeldetag: 01.04.1998
(51) Int. Cl.: G01N 1/14, G01N 33/20

(54) **Saugsonde**

(30) Priorität: 02.04.1997 DE 19713544
(71) Anmelder: MINKON SAMPLER-TECHNIK GmbH, 40699 Erkrath (DE)
(72) Erfinder: Wünsch, Gerhard, 40822 Mettmann (DE); Kasel, Werner, 54700 Norroy les Pont-a-Mousson (FR)
(74) Vertreter: König, Reimar, Dr.-Ing.

(57) **Zusammenfassung**

Zur Probenentnahme aus Metallschmelzen wird eine Saugsonde mit einer Kokille, einer hülsenförmigen Kokillenaufnahme und einer die beiden verbindenden die Kokille mit Abstand umgebenden, verlorenen Kupplungshülse aus Pappe vorgeschlagen.

## Beschreibung

Die Erfindung betrifft eine Saugsonde zur Probenentnahme aus Metallschmelzen mit einer Kokille, einer Kokillenaufnahme und Mittel zur Verbindung von Kokille und Kokillenaufnahme.

Eine derartige Saugsonde ist aus der deutschen Patentschrift 23 40 389 bekannt. Diese Saugsonde besteht aus einem glockenförmigen Gehäuse, das fest mit einer Pumpenlanze verbunden ist, und einer Kokille, die mittels einer Scheibe und eines Dichtungsrings in dem glockenförmigen Gehäuse fixiert ist. Dies erfordert einen Dichtungsring, der in eine Ringnut der Kokille eingreift und die Kokille so nach Art eines Sprengrings im Gehäuse hält. Diese Saugsonde birgt den Nachteil in sich, daß die Klemmverbindung zwischen dem glockenförmigen Gehäuse und der Kokille den Beanspruchungen bei der Probenentnahme nicht zuverlässig standhält. Problematisch ist auch die Erzeugung und die Aufrechterhaltung des notwendigen Unterdrucks im Innern des glockenförmigen Gehäuses, da der Dichtungsring der Strahlungswärme des Bades oder auch der Schmelze und der Schlacke selbst ausgesetzt ist. Schließlich ist es bei dieser Sonde auch schwierig, die Kokille mit der gezogenen Probe aus dem Gehäuse zu nehmen, da die Scheibe infolge des Einflusses der heißen Schmelze und Schlacke zumeist fest in dem glockenförmigen Gehäuse sitzt.

Des weiteren sind Probenentnahmesysteme bekannt, bei denen eine in einer Papphülse befindliche Kokille am Ende einer Pumpenlanze angeordnet ist. Bei diesen Systemen befindet sich die Kokille in unmittelbarem Kontakt mit der Papphülse. Das hat zur Folge, daß die Papphülse durch die in die Kokille eintretende Metallschmelze bzw. die dadurch verursachte Strahlungshitze so stark erwärmt wird, daß sie teilweise verbrennt, zumindest aber verkohlt und dadurch Rauchgase freisetzt. Diese Rauchgase verunreinigen zum einen die Saugpumpe, so daß diese in regelmäßigen Abständen gereinigt werden muß, zum anderen stellen sie eine Gefahr für die Umwelt, insbesondere für die mit der Probenentnahme beauftragten Arbeiter dar.

Vor diesem Hintergrund liegt der Erfindung das Problem zugrunde, eine Saugsonde zu schaffen, die bei hinreichender Haltbarkeit, trotz der Verwendung von Pappe als Sondenwerkstoff, nicht, oder nur in geringem Maße mit der Gefahr einer Rauchgasentwicklung verbunden ist.

Dieses Problem wird erfindungsgemäß dadurch gelöst, daß eine am Ende der Pumpenlanze angeordnete vorzugsweise nicht brennbare Hülse als Kokillenaufnahme die Kokille mit hinreichendem Abstand umgibt. Zum Verbinden von Kokille und Hülse dient eine verlorene Kupplungshülse, die aus brennbarem Material bestehen kann, da sie nicht in direkten Kontakt mit der glühenden Kokille kommt. Der Abstand beider Hülsen von der Kokille verhindert, daß die Kupplungshülse verbrennt bzw. verkohlt und somit Rauchgase im Innenraum der Kokillenaufnahme bzw. Hülse entstehen.

Die Durchmesser der hülsenförmigen Kokillenaufnahme und der Kupplungshülse sind so aufeinander abgestimmt, daß sie sich ineinander stecken lassen. Dabei kann die Kupplungshülse auf oder in die Kokillenaufnahme gesteckt werden. Befindet sich die Kupplungshülse auf der Kokillenaufnahme, dann ist sie im Bereich ihrer Überlappung mit der Kokillenaufnahme gegen die von der glühenden Kokille ausgehende Strahlungshitze geschützt. Im Einzelfall hängt das Maß des Strahlungsschutzes von dem Werkstoff ab, aus dem die Kokillenaufnahme besteht. Wichtig ist, daß die Materialien der beiden Hülsen so aufeinander abgestimmt sind, daß die Verbindung zwischen ihnen stabil genug ist, um den Beanspruchungen, denen die Sonde bei der Probenentnahme ausgesetzt ist, standzuhalten. Des weiteren muß die Verbindung luftdicht sein, da sonst das Prinzip der Saugsonde, nämlich daß die Schmelze mittels eines durch eine Pumpe erzeugten Unterdruckes in die Kokille gesogen wird, nicht funktioniert.

Aus Kostengründen besteht die Kupplungshülse bevorzugt aus Pappe, da sich die mit ihr verbundene Kokille nur einmal verwenden läßt. Die Kokillenaufnahme eignet sich hingegen für eine Mehrfachverwendung, wenn sie aus Stahl, Aluminium oder einem nicht brennbaren und nicht gasenden Material besteht. Im folgenden wird die erfindungsgemäße Saugsonde anhand von in der Zeichnung dargestellten Ausführungsbeispielen des näheren erläutert. In der Zeichnung zeigen:

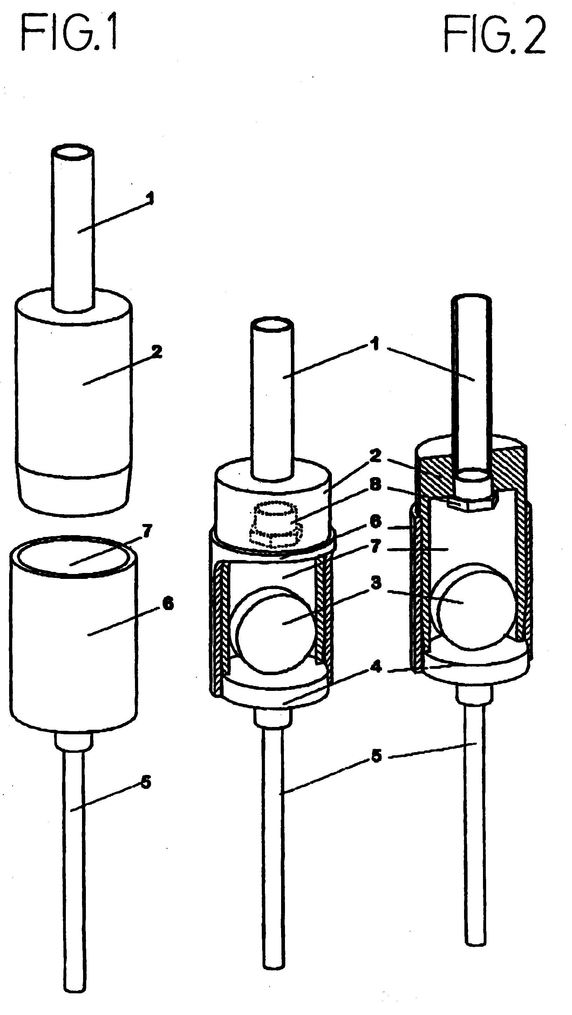

- Fig. 1: eine Kokille mit einer übergreifenden Kupplungshülse und eine Kokillenaufnahme,
- Fig. 2: die Kokille und die Kokillenaufnahme der Fig. 1 im Betriebszustand,
- Fig. 3: eine Kokille mit einer eingreifenden Kupplungshülse und die zugehörige Kokillenaufnahme,
- Fig. 4: eine Kokille und die Kokillenaufnahme der Fig. 3 im Betriebszustand.

Das Ende einer Pumpenlanze 1 ist mit einer hülsenförmigen Kokillenaufnahme 2 aus Stahl oder Aluminium verbunden. Eine Kokille 3 ist etwa mittig mit einer Scheibe 4, beispielsweise aus einem keramischen Material, versehen und weist ein mit dieser verbundenes Saugrohr 5 auf. An der Scheibe 4 befindet sich eine Kupplungshülse 6, welche die Kokille selber nicht berührt. Die Hülse 6 besteht bevorzugt aus Pappe.

Im Betriebszustand befindet sich die Kokille 3 in der Kokillenaufnahme 2 und ist mit dieser mittels der auf die Kokillenaufnahme 2 gesteckten Kupplungshülse 6 verbunden. Diese Steckverbindung gewährleistet zum einen einen festen Sitz der Kokille 3 in der Kokillenaufnahme 2 und dichtet zum anderen den Innenraum der Kokillenaufnahme 2 nach außen hin ab, so daß ein von einer nicht dargestellten Pumpe erzeugter im Innenraum 7 der Kokillenaufnahme 2 herrschender Unterdruck aufrechterhalten bleibt, der dazu führt, daß Metallschmelze in die Kokille 3 gesogen wird.

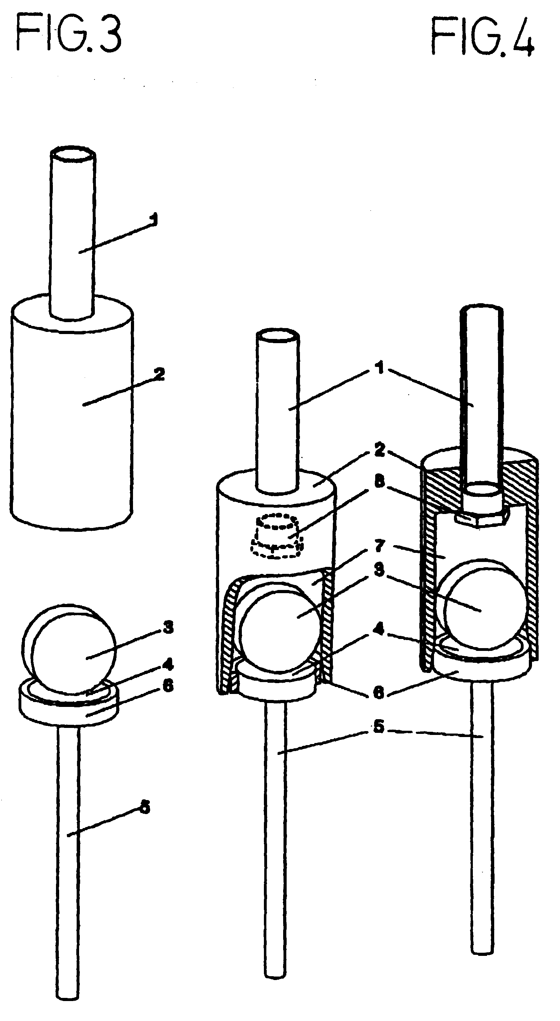

Das in den Figuren 3 und 4 dargestellte Ausführungsbeispiel einer erfindungsgemäßen Saugsonde unterscheidet sich nur dadurch von dem zuvor beschriebenen, daß die Hülse 6 einen kleineren Durchmesser als die Kokillenaufnahme 2 aufweist und im Betriebszustand in die Kokillenaufnahme 2 gesteckt ist.

Beiden Ausführungsbeispielen ist der Vorteil gemeinsam, daß sich die Kokille 3 in einem hinreichend großen Abstand von der Kupplungshülse 6 befindet und daher die Verwendung von Pappe als Hülsenwerkstoff möglich ist, ohne daß es zu einer nennenswerten Entwicklung von Rauchgasen kommt. Vorteilhaft wirkt sich zudem der Abschirmeffekt aus, der von der Kokillenaufnahme 2 ausgeht und die Kupplungshülse 6 vor zu großer von der Schmelze abgegebener Strahlungswärme schützt.

Ein verbesserter Kraftschluß zwischen Kokillenaufnahme 2 und Kupplungshülse 6 ergibt sich durch ein Gewinde oder durch Riefen an der Kokillenaufnahme 2.

## Patentansprüche

1. Saugsonde zur Probenentnahme aus Schmelzen mit
- einer Kokille (3),
- einer hülsenförmigen Kokillenaufnahme (2) und
- einer die Kokille mit Abstand umgebenden, verlorenen Kupplungshülse (6).

2. Saugsonde nach Anspruch 1, dadurch gekennzeichnet, daß die Kupplungshülse (6) einen größeren Durchmesser aufweist als die Kokillenaufnahme (2).

3. Saugsonde nach Anspruch 1, dadurch gekennzeichnet, daß die Kupplungshülse (6) einen kleineren Durchmesser als die Kokillenaufnahme (1) aufweist.

4. Saugsonde nach einem der Ansprüche 1 bis 3, dadurch gekennzeichnet, daß die Kokille (3) eine Scheibe (4) aufweist, an der die Kupplungshülse (6) angeordnet ist.

5. Saugsonde nach einem der Ansprüche 1 bis 4, dadurch gekennzeichnet, daß die Kupplungshülse (6) aus Pappe besteht.
